# EUROPÄISCHE PATENTSCHRIFT

(11) **EP 1 224 405 B1**
(45) Veröffentlichungstag und Bekanntmachung des Hinweises auf die Patenterteilung: **26.01.2005**
(21) Anmeldenummer: 00967416.9
(22) Anmeldetag: 12.10.2000
(51) Int. Cl.: F16D 43/284, F16D 25/0638

(54) **DREHZAHLDIFFERENZABHÄNGIGE HYDRAULISCHE KUPPLUNG MIT STEUERVENTILEN**
ROTATIONAL SPEED DIFFERENTIAL HYDRAULIC CLUTCH HAVING CONTROL VALVES
EMBRAYAGE HYDRAULIQUE DEPENDANT DE LA DIFFERENCE DE VITESSE DE ROTATION AVEC SOUPAPES DE COMMANDE

(30) Priorität: 12.10.1999 AT 70399 U
(43) Veröffentlichungstag der Anmeldung: 24.07.2002
(73) Patentinhaber: MAGNA Drivetrain AG & Co KG, 8502 Lannach (AT)
(72) Erfinder: GRATZER, Franz, A-8152 Stallhofen (AT)
(74) Vertreter: Kovac, Werner
(86) Internationale Anmeldenummer: PCT/AT2000/000264
(87) Internationale Veröffentlichungsnummer: WO 2001/027487

(56) Entgegenhaltungen:
- EP-A- 0 926 378
- DE-A- 19 854 867
- US-A- 4 924 989

## Beschreibung

Die Erfindung handelt von einer Drehzahldifferenzabhängigen hydraulischen Kupplung, bestehend aus einem in einem raumfesten und ein Reservoir für eine Arbeitsflüssigkeit bildenden Gehäuse rotierenden Triebgehäuse, einer in diesem untergebrachten hydrostatischen Verdrängungsmaschine, einer Triebwelle, einer Reibungskupplung zur Verbindung der Triebwelle mit dem Triebgehäuse und einem Kolben zur Beaufschlagung der Reibungskupplung, wobei bei Auftreten einer Differenzdrehzahl zwischen dem Triebgehäuse und der Triebwelle in einem Druckraum ein Druck erzeugt wird, der eine Beaufschlagung der Reibungskupplung bewirkt, und wobei die hydrostatische Verdrängungsmaschine über eine erste und eine zweite Öffnung für die Zu- und Abfuhr von Arbeitsmedium und über eine dritte und vierte Öffnung für die Verbindung mit der Druckkammer verfügt.

Derartige Kupplungen finden in verschiedenen Konstellationen im Antriebsstrang von Kraftfahrzeugen Verwendung, zur direkten Übertragung eines Drehmomentes oder zur Sperrung eines verbundenen Differentialgetriebes für den Antrieb der Räder einer Achse oder für die Verteilung des Antriebsmomentes zwischen zwei Achsen. Die hydrostatische Verdrängungsmaschine besteht beispielsweise aus einem Innenrotor und aus einem Aussenrotor, genauso können aber auch hydrostatische Verdrängungsmaschinen anderer Bauart verwendet werden. In jedem Falle führen bei Drehzahldifferenz zwei Teile (beispielsweise Antriebsgehäuse und Ausgangswelle) eine Relativbewegung aus und erzeugen so einen den Kolben der Reibungskupplung beaufschlagenden Druck.

Eine derartige Kupplung ist beispielsweise aus der US-A 5,536,215, bekannt. Bei dieser ist zwischen dem Druckraum und einem Raum niedereren Druckes, es ist der Kupplungsraum, ein von einem bimetallischen Blättchen gebildetes Ventil vorgesehen, das temperaturabhängige Viskositätsänderungen des Arbeitsfluids kompensieren soll. Weitere Regelorgane sind nicht vorgesehen.

Aus der US 4,727,966 ist eine weitere derartige Kupplung in etwas anderer Anordnung bekannt. Bei dieser sind zwischen der dritten und vierten Öffnung und dem Druckraum Abströmöffnungen mit Drosselstellen vorgesehen, die verschiedene Ansprechdrucke für die beiden möglichen Richtungen der Drehzahldifferenz, also eine Unterscheidung zwischen Treibund Schleppbetrieb, bzw Vorwärts- und Rückwärtsfahrt möglich machen.

Weiters sind in einer Ausführungsform (Fig.7) bereits Regelorgane, nämlich weitere Abströmventile, deren Ansprechdruck regelbar ist, vorgesehen. Das Stellsignal für diese wird von einem Regler aus allerlei Betriebsgrößen ermittelt. Die Regelorgane sind im rotierenden Teil untergebracht, die Stellsignale, hier hydraulische, müssen ihnen daher über eine Dreheintragung zugeführt werden. Eine Beeinflussung des Druckes auf der Saugseite der Verdrängungsmaschine ist nicht vorgesehen. Das alles und zusätzlich die Einwirkung der Fliehkraft auf die Regelorgane machen eine feinfühlige, genaue und schnelle Regelung unmöglich.

Aus der DE 198 54 867 A ist noch eine weitere derartige Kupplung in wieder anderer Anordnung bekannt, bei der nicht die Verdrängungsmaschine, sondern die Druckkammer selbst über eine Dreheintragung mit einem gehäusefesten Steuerventil zur Druckmodulierung auf der Druckseite verbunden ist. Auf diese Weise ist nur eine unvollkommene Steuerung möglich. So muß etwa zum Abschleppen des Fahrzeuges die Verdrängungsmaschine vollommen drucklos gemacht werden, was auch ein Ventil an der Saugseite erfordert. Ausserdem erfordert die Ventilanordnung eine Bauweise der ganzen Kupplungseinheit, die viele andere Nachteile hat.

Es ist daher Ziel der Erfindung, eine gattungsgemäße Kupplung so weiterzuentwickeln, daß eine feinfühlige, genaue und schnelle Regelung und Anpassung der Charakteristik gewährleistet ist, mit möglichst geringem Aufwand. Erfindungsgemäß wird das dadurch erreicht, daß die erste und die zweite Öffnung jeweils über eine erste und zweite Dreheintragung und ein gehäusefestes erstes und zweites Ventil mit dem Reservoir strömungs verbunden sind, dass das erste und das zweite Ventil als steuerbare Drosselventile ausgebildet sind, sodaß unabhängig von der Richtung der Differenzdrehzahl ein Steuereingriff sowohl an der Zufuhr- als auch an der Abfuhrseite der Verdrängungsmaschine erfolgt.

Es sind also am kürzesten Weg zu und von der Verdrängungsmaschine, auf der Druck- und auf der Saugseite, Steuerventile vorgesehen, die eine direkte Einwirkung auf die Kupplung mit sehr geringer Verzögerung bei allen denkbaren Fahrzuständen gestatten. Da es sich um steuerbare Drosselventile handelt, diese also im Hauptstrom angeordnet sind, kann über den gesamten Stellbereich feinfühlig und genau gesteuert werden.

Dazu kommen noch alle Vorteile gehäusefest angeordneter Steuerventile: Einfache Verbindung mit dem Steuergerät, keine störenden Fliehkrafteinflüsse, keine Beschränkung der Baugröße, und gute Zugänglichkeit. Wieters ist dadurch die Zu- und Abfuhr des Arbeitsmediums auf einer Seite der Verdrängungsmaschine möglich, sodaß die Dreheinführungen relativ einfach bei kleinem Durchmesser vorgesehen werden können. Der Mehraufwand für die Drehdurchführung wird durch den Wegfall der ohne die beiden Steuerventile erforderlichen Rückschlagventile in derselben Leitung wettgemacht.

In einer bevorzugten Ausführungsform bilden das das erste und das zweite Ventil ein gemeinsames Steuerventil (Anspruch 2). Nebst der damit verbundenen Verbilligung ist damit auch eine Verbesserung der Zuverlässigkeit erreicht, ohne irgendwelche Einbußen bei der Funtionsfähigkeit im Fahrbetrieb. Dabei können das erste und das zweite Ventil Proportionalventile (Anspruch 3) oder aber von einem Schrittmotor angesteuert sein (Anspruch 4).

In Weiterbildung der Erfindung ist zwischen der dritten und vierten Öffnung und der Druckkammer ein doppeltwirkendes Rückschlagventil vorgesehen (Anspruch 5). Dadurch. dass bei diesem Ventil eine Seite immer offen ist, kann der Druckraum über dieses Ventil und das Regelventil sehr schnell drucklos gemacht werden. was insbesondere beim Bremsen (ABS, ESP) von Vorteil ist. Ausserdem ist das Ventil besonders platzsparend in der Wand zwischen der Verdrängungsmaschine und dem Druckraum unterzubringen. Dadurch, daß es nur ein Ventil mit einem Schaltelement (am besten mit einer Kugel) ist, ist der einwandfreie Übergang von einer Betriebsart zur anderen gewährleistet.

Wenn von der Verdrängungsmaschine über ein Drosselventil ein Kühlkanal in den Kupplungsraum führt (Anspruch 6), ist für ausreichende Schmierung und Kühlung der Kupplung gesorgt, was deren schnellem und sauberem Ansprechen förderlich ist.

Ein vorteilhaftes Detail der Erfindung besteht darin, daß das gemeinsame Steuerventil von einem in einer Büchse verschiebbaren Stellkolben gebildet ist, wobei die Büchse auf beiden Seiten mit dem Reservoir strömungsverbunden ist und eine erste und eine zweite seitliche Steueröffnung hat, von denen die eine über die erste und die andere über die zweite Öffnung (Druckseite bzw Saugseite) mit der Verdrängungsmaschine verbunden ist, und wobei der Stellkolben in seinen beiden Endstellungen die erste bzw die zweite Steueröffnung verschließt und in den Zwischenstellungen die beiden Steueröffnungen gegenläufig mehr oder minder schließt. (Anspruch 7). Dadurch ist der Öffnungs- bzw. Schließgrad der beiden Ventile mit geringstem Bauaufwand zwangsläufig gekoppelt. Raumökonomie und Zugänglichkeit sind weiter verbessert, wenn die Büchse des Steuerventiles in einer Ebene quer zur Drehachse der Kupplung im Bereich der Dreheintragungen angeordnet ist. (Anspruch 8).

Ein weiters vorteilhaftes Detail der Erfindung besteht darin, daß das doppeltwirkende Rückschlagventil zwischen Verdrängungsmaschine und Druckkammer aus einer Tangentialbohrung in einer Ebene quer zur Drehachse der Kupplung und aus einem darin geführten Schließkörper besteht, wobei die beiden Enden der Tangentialbohrung mit der dritten und vierten Öffnung der Verdrängungsmaschine und ihre Mitte mit dem Druckraum in Verbindung stehen (Anspruch 9). So bleibt das Ventil bei minimalem Raumbedarf von der Fliehkraft unbeeinträchtigt.

Im Folgenden wird die Erfindung anhand von Abbildungen beschrieben und erläutert. Es stellen dar:
- Fig. 1:: Ein erstes Schema einer erfindungsgemäßen Kupplung,
- Fig. 2:: Ein zweites Schema einer Ausführungsvariante der erfindungsgemäßen Kupplung,
- Fig. 3:: Einen Längsschnitt durch eine bevorzugte Ausführungform der Erfindung,
- Fig. 4:: Eine Ansicht von von vorne, teilweise aufgerissen,
- Fig. 5:: Eine Vorderansicht der Zwischenplatte 45 (Fig,3)m teilweise aufgerissen.

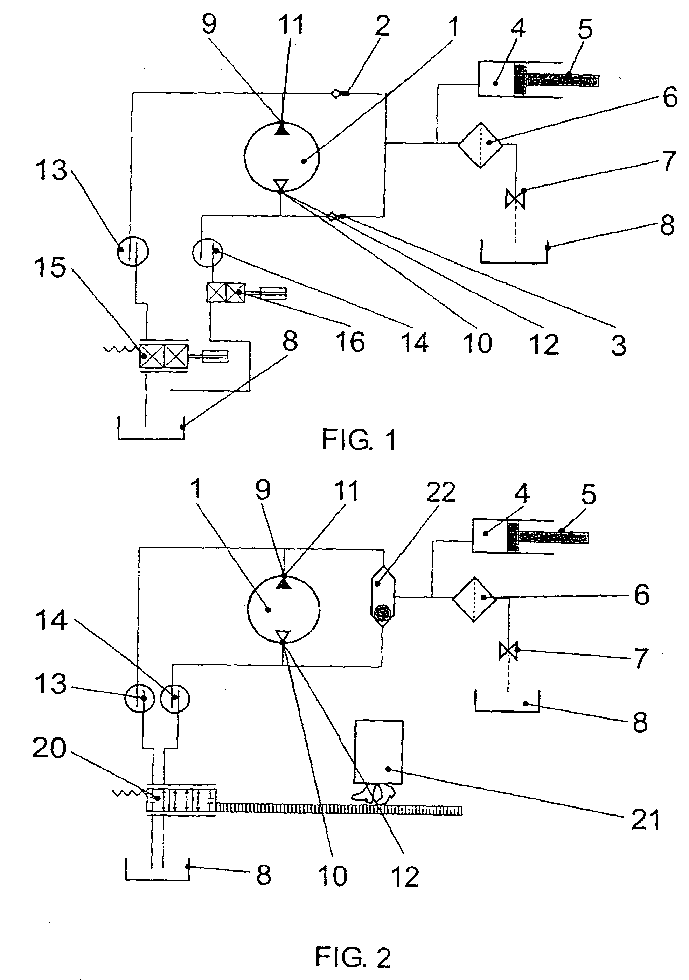

Fig. 1 ist nur ein Schema, in dem die hydrostatische Verdrängungsmaschine mit 1 und deren vier Öffnungen mit 9, 10, 11 und 12 bezeichnet und zur Vereinfachung teilweise vereinigt sind. Von diesen besteht über die obligatorischen Rückschlagventile 2, 3 eine Verbindung zu einer Druckkammer 4, die über einen Kolben 5 eine hier noch nicht dargestellte Lamellenkupplung zusammenpreßt. Über ein Drosselventil 7 und gegebenenfalls über einen Filter 6 ist die Verbindung zu einem Reservoir 8 hergestellt. Die Öffnungen 9, 10 sind über eine erste und eine zweite Dreheintragung 13, 14 mit einem ersten und zweiten Steuerventil 15, 16 verbunden.

Die Variante der Fig.2 unterscheidet sich davon nur dadurch, daß an Stelle der beiden Steuerventile ein gemeinsames Steuerventil 20 und an Stelle der beiden Rückschlagventile ein gemeinsames doppeltes Rückschlagventil 22 vorgesehen ist. Das gemeinsame Steuerventil 20 wird von einem Schrittmotor 21 angesteuert.

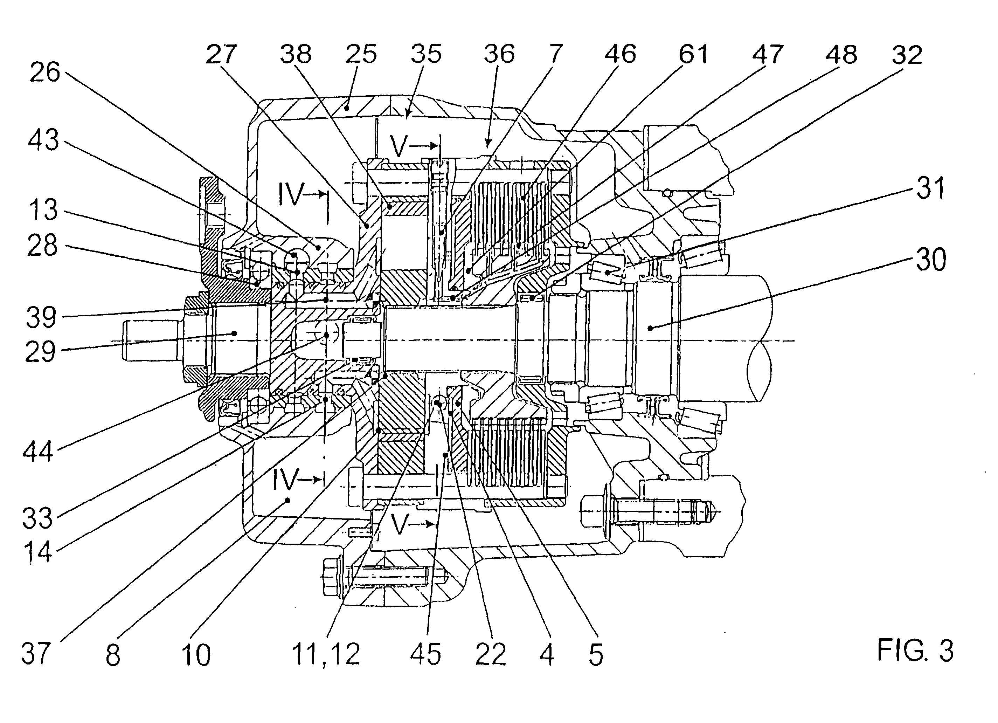

In Fig. 3 ist das Gehäuse, das gleichzeitig das Reservoir 8 für das Arbeitsfluid bildet, mit 25 und ein Verbindungsflansch mit 26 bezeichnet. In dessen Innerem befindet sich ein Triebgehäuse 27, das in eine Triebwelle 29 ausläuft, die Mittels eines Lagers 28 im Gehäuse 25 drehbar geführt ist. An der der Triebwelle 29 abgelegenen Seite ragt eine Abtriebswelle 30 in das Triebgehäuse 27 hinein. Sie ist mittels eines Lagers 31 im Gehäuse 25 gelagert. Zwischen dem Triebgehäuse 27 und der Abtriebswelle 30 sind zur gegenseitigen Abstützung noch zwei Nadellager 32, 33 vorgesehen.

Im Inneren des Triebgehäuses 27 befindet sich eine hydrostatische Verdrängungsmaschine, allgemein mit 35 bezeichnet und eine Reibungskupplung 36, die eine Lamellenkupplung in an sich bekannter Bauart ist.

Die hydrostatische Verdrängungsmaschine 35 besteht hier aus einem Innenrotor 37, der mit der Abtriebswelle 30 drehfest verbunden ist, und aus einem Aussenrotor 38, der im Triebgehäuse exzentrisch frei drehbar ist. Die beiden Rotoren 37, 38 weisen zahnartige Gebilde in verschiedener Anzahl auf, die miteinander kämmen.

Im Triebgehäuse 27 befinden sich an der, der Reibungskupplung 36 abgewandten Seite, eine erste und eine zweite Öffnung 9, 10 und an der Reibungskupplung 36 zugewandten Seite, dritte und vierte Öffnungen 11, 12. Von der ersten Öffnung 9 führt eine erste Verbindungsbohrung (oder mehrere aufeinanderfolgende Bohrungen) 39 zu einer ersten Dreheintragung 13 zwischen Triebgehäuse 27 und Gehäuse 25. Von der zweiten Öffnung 10 führt eine zweite Verbindungsbohrung 41 zu einer zweiten Dreheintragung 14, die axial versetzt zur ersten Dreheintragung angeordnet ist.

Von den beiden Dreheintragungen 13, 14 führt ein erster Stichkanal 43 und ein zweiter Stichkanal 44 zum gemeinsamen Steuerventil 20 (nicht dargestellt), das im Verbindungsflansch 26 des Gehäuses 25, also im nicht rotierenden Teil, angeordnet ist. Die dritte und die vierte Öffnung 11, 12 sind in einer Zwischenplatte 45, die Teil des Triebgehäuses 27 ist und an die hydrostatische

Verdrängungsmaschine 35 direkt anschließt. In der Zwischenplatte 45 ist auch das gemeinsame Rückschlagventil 22 und das Drosselventil 7.

Auf der der hydrostatischen Verdrängungsmaschine abgekehrten Seite der Zwischenplatte 45 befindet sich zuerst die Druckkammer 4 und dann der Kolben 5, der bei Beaufschlagung der Druckkammer 4, die Kupplungslamellen 46, 47 zusammendrückt. Die Kupplungslamellen 46 sind mit dem Triebgehäuse 27 und die Kupplungslamellen 47 mit der Abtriebswelle 30 drehfest aber axial verschiebbar verbunden.

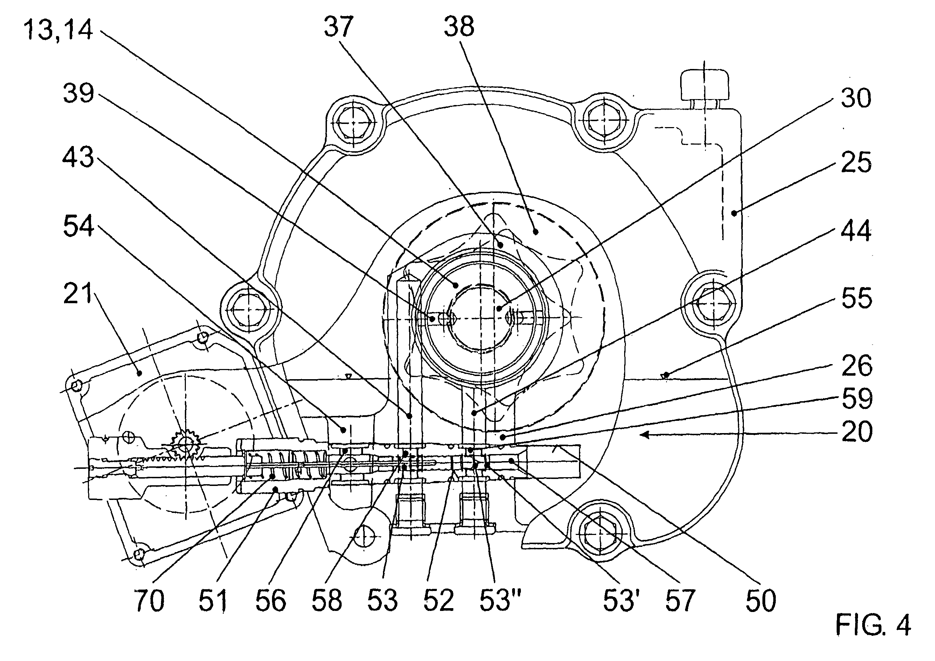

In Fig. 4 ist vor allem das gemeinsame Steuerventil 20 zu sehen, welches in einer Ventilbohrung 50 im Verbindungsflansch 26 untergebracht ist. Es besteht in einer in die Ventilbohrung 50 eingesteckten und eingeschraubten Büchse 51 mit einer Zylinderbohrung 52, in der ein Stellkolben 53 mittels des Schrittmotors 21 verstellbar ist. Der Verbindungsflansch 26 weist eine Vertiefung 54 auf, durch die auf einer Seite über eine erste Zutrittsöffnung 56, eventuell über ein Filter, die Verbindung zum im Reservoir befindlichen Arbeitsfluid hergestellt wird. Am anderen Ende der Büchse 51 hat das Arbeitsfluid über eine zweite Zutrittsöffnung 57 freien Zutritt zur Zylinderbohrung 52. Der ungefähre Ölspiegel ist angedeutet und mit 55 bezeichnet.

Zwischen den beiden Zutrittsöffnungen 56, 57 weist die Büchse 51 zwei seitliche Steueröffnungen auf. Die erste Steueröffnung 58 steht mit dem ersten Stichkanal 43 in Verbindung, die zweite Steueröffnung 59 mit dem zweiten Stichkanal 44 (siehe Fig. 3). Die Steueröffnungen 58, 59 müssen nicht unbedingt zylindrisch sein, sie können durch abweichende Formgebung verfeinerten Steuerungsansprüchen angepaßt werden. Weiters ist eine Feder 70 vorgesehen, die den Kolben 53 in besonderen Situationen automatisch in die gezeigte linke Extremstellung bringt.

Die Funktion des Ventiles 22 wird nun an Hand der drei angezeichneten Stellungen des Stellkolbens 53 erklärt. In der Stellung 53 (Volllinie) ist die erste Steueröffnung 58 ganz geschlossen, die zweite Steueröffnung 59 ganz geöffnet. In der Stellung 53' (strichliert) ist die erste Steueröffnung 58 ganz geöffnet und die zweite Steueröffnung 59 ganz geschlossen. In der Stellung 53" (strichliert) sind beide Steueröffnungen 58, 59 teilweise offen. Die Wirkung dieser Ventilstellungen hängt von der Richtung der Drehzahldifferenz in der hydrostatischen Verdrängungsmaschine und somit vom Fahrzustand ab:
A) Zugbetrieb vorwärts: Der Verstellkolben befindet sich in der Mittelstellung 53". Die zweite Steueröffnung 59 ist (mehr oder minder) geöffnet, sie wirkt als Saugöffnung, die erste Steueröffnung 58 ist ebenfalls teilweise geöffnet, sie ist die Drucköffnung, der Stellkolben befindet sich in der Stellung 53". In dieser Stellung ist die Charakteristik der Kupplung weich, beispielsweise zum Rangieren und bei Kurvenfahrt auf der Straße. Soll die Kupplung für höhere Traktion steif werden, das heisst ein großes Moment übertragen, etwa im Gelände oder bei Durchdrehen der Räder, so wird der Stellkolben in die Stellung 53 gebracht, in der die erste Steueröffnung 58 geschlossen ist.
B) Schubbetrieb vorwärts: Bei Schubbremsung ist die erste Steueröffnung 58 offen (sie ist nun die Druckseite) und die zweite Steueröffnung 59 weitgehend geschlossen, der Stellkolben befindet sich in der Stellung 53'. Wenn eine Bremsung mit ABS stattfindet, so wird die zweite Steueröffnung 59 schnell geöffnet, was durch die Feder unterstützt wird, der Stellkolben befindet sich dann in der Stellung 53.
C) Zugbetrieb rückwärts: Die zweite Steueröffnung 59 ist geschlossen, die erste Steueröffnung 58 ist offen, der Stellkolben befindet sich bei Regelbetrieb im Bereich zwischen den Stellungen 53' und 53".
D) Schubbetrieb rückwärts: Beide Öffnungen 58, 59 sind teilweise geöffnet, entsprechend Position des Stellkolben 53".
E) Abschleppen vorwärts: die erste Steueröffnung muß offen und die zweite Steueröffnung 59 (entsprechend der Saugseite) muß weitgehend geschlossen sein, damit beim Abschleppen keine Schleppwiederstände auftreten.

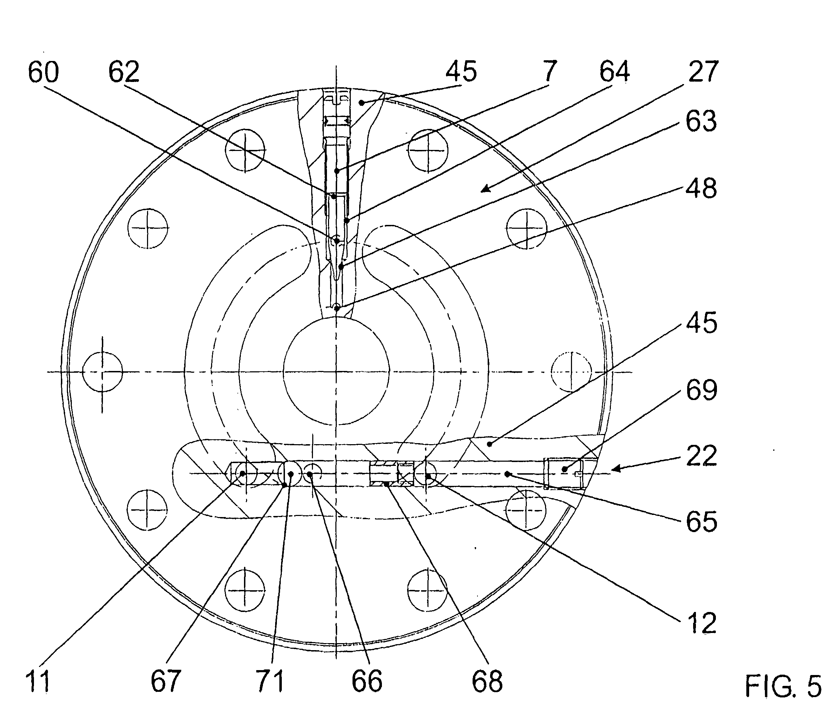

Fig. 5 zeigt zwei weitere Ventile, das Drosselventil 7 und das gemeinsame doppeltwirkende Rückschlagventil 22. Beide sind in der Zwischenplatte 45 untergebracht (siehe auch Fig. 3). Vom Druckraum 4 gelangt Druckmedium durch das Verbindungsloch 60 in die Drosselventilbohrung 64, in der ein Drosselstift 62 verstellbar eingeschraubt ist. Dieser bildet mit der Drosselventilbohrung 64 eine Drosselstelle 63, an die innen ein Kühlkanal 48 anschließt, der in den Kupplungsraum 61 (Fig.3) führt.

Das gemeinsame Rüchschlagventil besteht aus einer Tangentialbohrung 65 die an einem Ende von einem Stopfen 69 druckdicht verschlossen ist und aus einem darin beweglichen Schließkörper 71. In die Tangentialbohrung 65 münden die dritte und die vierte Öffnung 11, 12 der hydrostatischen Verdrängungsmaschine 35. Zwischen diesen Öffnungen 11, 12 befindet sich auf einer Seite eine Anschlagschulter 67 und auf der anderen Seite ein angeschraubter Anschlagring 68. Zwischen diesen beiden Anschlägen 67, 68 kann sich der Schließkörper 71, hier eine Kugel, hin und her bewegen.

Ungefähr in der Mitte, zwischen den beiden Endstellungen des Schließkörpers 71 befindet sich eine Durchtrittsöffnung 66, die die Verbindung mit der Druckkammer 4 herstellt. Je nach dem, in welcher der beiden Öffnungen 11, 12 der Druck höher ist, nimmt die Kugel 71 eine Stellung ein, in der eine der beiden Öffnungen 11, 12 mit der Zutrittsöffnung 66 in Verbindung steht. Auf diese Weise ist das doppeltwirkende Rückschlagventil 22 geschaffen.

## Patentansprüche

1. Drehzahldifferenzabhängige hydraulische Kupplung, bestehend aus einem in einem raumfesten und ein Reservoir für eine Arbeitsflüssigkeit bildenden Gehäuse (25) rotierenden Triebgehäuse (27), einer in diesem untergebrachten hydrostatischen Verdrängungsmaschine (35), einer Abtriebswelle (30), einer Reibungskupplung (36) zur Verbindung der Abtriebswelle (30) mit dem Triebgehäuse (27) und einem Kolben (5) zur Beaufschlagung der Reibungskupplung (36), wobei bei Auftreten einer Differenzdrehzahl zwischen dem Triebgehäuse (27) und der Abtriebswelle (30) in einer Druckkammer (4) ein Druck erzeugt wird, der eine Beaufschlagung der Reibungskupplung (36) bewirkt, und wobei die hydrostatische Verdrängungsmaschine (35) über eine erste (9) und eine zweite (9) Öffnung (9,10) für die Zu- und Abfuhr von Arbeitsmedium und über eine dritte (11) und vierte (12) Öffnung (11,12) für die Verbindung mit der Druckkammer (4) verfügt, **dadurch gekennzeichnet, daß** die erste und die zweite Öffnung (9,10) jeweils über eine erste und zweite Dreheintragung (13,14) und ein gehäusefestes erstes und zweites Steuerventil (15,16) mit dem Reservoir (8) strömungsverbunden sind, wobei das erste und das zweite Steuerventil (15,16) als steuerbare Drosselventile ausgebildet sind, sodaß unabhängig von der Richtung der Differenzdrehzahl ein Steuereingriff sowohl an der jeweiligen Zufuhr- als auch an der Abfuhrseite der Verdrängungsmaschine erfolgt.

2. Drehzahldifferenzabhängige hydraulische Kupplung nach Anspruch 1, **dadurch gekennzeichnet, daß** das das erste und das zweite Steuerventil (15, 16) ein gemeinsames Steuerventil (20) bilden.

3. Drehzahldifferenzabhängige hydraulische Kupplung nach Anspruch 1, **dadurch gekennzeichnet, daß** das das erste und das zweite Steuerventil (15, 16) Proportionalventile sind.

4. Drehzahldifferenzabhängige hydraulische Kupplung nach Anspruche 1, **dadurch gekennzeichnet, daß** das erste und das zweite Steuerventil (15, 16; 20) von einem Schrittmotor (21) angesteuert sind.

5. Drehzahldifferenzabhängige hydraulische Kupplung nach Anspruch 1, **dadurch gekennzeichnet, daß** zwischen der dritten und vierten Öffnung (11,12) und der Druckkammer (4) ein doppeltwirkendes Rückschlagventil (22) vorgesehen ist.

6. Drehzahldifferenzabhängige hydraulische Kupplung nach Anspruch 5, **dadurch gekennzeichnet, daß** von der Verdrängungsmaschine (35) über ein Drosselventil (7) ein Kühlkanal (48) in den Kupplungsraum (61) führt.

7. Drehzahldifferenzabhängige hydraulische Kupplung nach Anspruch 2, **dadurch gekennzeichnet, daß** das gemeinsame Steuerventil (20) von einem in einer Büchse (51) verschiebbaren Stellkolben (53) gebildet ist, wobei die Büchse auf beiden Seiten Zutrittsöffnungen (56,57) zum Reservoir (8) besitzt und eine erste (59) und eine zweite (58) seitliche Steueröffnung (58,59) hat, von denen die eine (59) mit der zweiten (57) und andere (58) mit der ersten Zutrittsöffnung (56) (Druckseite bzw Saugseite) mit der Verdrängungsmaschine (35) verbunden ist, und wobei der Stellkolben (53) in seinen beiden Endstellungen (53, 53") die erste (58) bzw die zweite (59) Steueröffnung verschließt und in den Zwischenstellungen (53') die beiden Steueröffnungen (58,59) gegenläufig mehr oder minder schließt.

8. Drehzahldifferenzabhängige hydraulische Kupplung nach Anspruch 7, **dadurch gekennzeichnet, daß** die Büchse (51) des Steuerventiles (20) in einer Ebene quer zur Drehachse der Kupplung im Bereich der Dreheintragungen (13,14) angeordnet ist.

9. Drehzahldifferenzabhängige hydraulische Kupplung nach Anspruch 5, **dadurch gekennzeichnet, daß** das doppeltwirkende Rückschlagventil (22) zwischen Verdrängungsmaschine (35) und Druckkammer (4) aus einer Tangentialbohrung (65) in einer Ebene quer zur Drehachse der Kupplung und aus einem darin geführten Schließkörper (71) besteht, wobei die beiden Enden der Tangentialbohrung (65) mit der dritten und vierten Öffnung (11,12) der Verdrängungsmaschine (35) und ihre Mitte mit der Druckkammer (4) in Verbindung stehen.

## Claims

1. A rotary speed difference-dependent hydraulic coupling comprising a transmission housing (27) rotating in a housing (25) which is stationary in space and which forms a reservoir for a working fluid, a hydrostatic displacement machine (35) disposed in the transmission housing (27), a drive output shaft (30), a friction clutch (36) for connecting the drive output shaft (30) to the transmission housing (27) and a piston (5) for acting upon the friction clutch (36), wherein when a differential speed occurs between the transmission housing (27) and the drive output shaft (30) a pressure which causes actuation of the friction clutch (36) is produced in a pressure chamber (4), and wherein the hydrostatic displacement machine (35) has a first (9) and a second (9) opening (9, 10) for the feed and discharge of working medium and a third (11) and a fourth (12) opening (11, 12) for connection to the pressure chamber (4), **characterised in that** the first and second openings (9, 10) are in flow communication with the reservoir (8) respectively by way of a first and a second rotary input (13, 14) and a first and a second control valve (15, 16) which are fixed with respect to the housing, wherein the first and second control valves (15, 16) are in the form of controllable throttle valves so that control intervention occurs in dependence on the direction of the differential speed both at the respective feed side and also at the discharge side of the displacement machine.

2. A rotary speed difference-dependent hydraulic coupling according to claim 1 **characterised in that** the first and second control valves (15, 16) form a common control valve (20).

3. A rotary speed difference-dependent hydraulic coupling according to claim 1 **characterised in that** the first and second control valves (15, 16) are proportional valves.

4. A rotary speed difference-dependent hydraulic coupling according to claim 1 **characterised in that** the first and second control valves (15, 16; 20) are actuated by a stepping motor (21).

5. A rotary speed difference-dependent hydraulic coupling according to claim 1 **characterised in that** a double-acting non-return valve (22) is provided between the third and fourth openings (11, 12) and the pressure chamber (4).

6. A rotary speed difference-dependent hydraulic coupling according to claim 5 **characterised in that** a cooling passage (48) leads from the displacement machine (35) by way of a throttle valve (7) into the coupling space (61).

7. A rotary speed difference-dependent hydraulic coupling according to claim 2 **characterised in that** the common control valve (20) is formed by an adjusting piston (53) which is displaceable in a sleeve (51), wherein the sleeve has access openings (56, 57) to the reservoir (8) at both sides and has a first (59) and a second (58) lateral control opening (59) of which the one (59) is connected with the second (57) and the other (58) is connected with the first access opening (56) (pressure side and suction side respectively) to the displacement machine (35) and wherein the adjusting piston (53) in its two limit positions (53, 53") closes the first (58) and the second (59) control opening respectively and in the intermediate positions (53') more or less closes the two control openings (58, 59) in opposite relationship.

8. A rotary speed difference-dependent hydraulic coupling according to claim 7 **characterised in that** the sleeve (51) of the control valve (20) is arranged in a plane transversely with respect to the axis of rotation of the coupling in the region of the rotary inputs (13, 14).

9. A rotary speed difference-dependent hydraulic coupling according to claim 5 **characterised in that** the double-acting non-return valve (22) between the displacement machine (35) and the pressure chamber (4) comprises a tangential bore (65) in a plane transversely with respect to the axis of rotation of the coupling and a closing body (71) guided therein, wherein the two ends of the tangential bore (65) are in communication with the third and fourth openings (11, 12) of the displacement machine (35) and its centre is in communication with the pressure chamber (4).

## Revendications

1. Embrayage hydraulique dépendant de la différence de vitesse de rotation, constitué d'un boîtier de commande (27) tournant dans un boîtier (25) fixe dans l'espace et formant un réservoir pour un liquide de travail, une machine de déplacement hydrostatique (35) montée dans la partie inférieure dudit boîtier de commande, un arbre de sortie (30), un embrayage à friction (36) destiné à relier l'arbre de sortie (30) au boîtier de commande (27) et un piston (5) destiné à solliciter l'embrayage à friction (36), dans lequel une pression est générée dans une chambre de pression (4) lors de la survenance d'une différence de vitesse de rotation entre le boîtier de commande (27) et l'arbre de sortie (30) et est exercée sur l'embrayage à friction (36), et la machine de déplacement hydrostatique (35) disposant d'une première ouverture (9) et d'une deuxième ouverture (9) pour l'amenée et la sortie d'un médium de travail ainsi qu'une troisième ouverture (11) et une quatrième ouverture (12) pour la liaison avec la chambre de pression (4), **caractérisé en ce que** les première et deuxième ouvertures (9, 10) sont en communication fluidique avec le réservoir (8) respectivement par des première et deuxième entrées de rotation (13, 14) et des premier et deuxième clapets de commande (15, 16) fixés au boîtier, les premier et deuxième clapets de commande (15, 16) étant conformés en clapet d'étranglement commandé de sorte que, en fonction du sens de la différence de vitesse de rotation, un engagement de commande est effectué aussi bien du côté de l'amenée que du côté de la sortie de la machine de déplacement.

2. Embrayage hydraulique dépendant de la différence de vitesse de rotation selon la revendication 1, **caractérisé en ce que** les premier et deuxième clapets de commande (15, 16) forment un clapet de commande commun (20).

3. Embrayage hydraulique dépendant de la différence de vitesse de rotation selon la revendication 1, **caractérisé en ce que** les premier et deuxième clapets de commande (15, 16) sont des clapets proportionnels.

4. Embrayage hydraulique dépendant de la différence de vitesse de rotation selon la revendication 1, **caractérisé en ce que** les premier et deuxième clapets de commande (15, 16 ; 20) sont commandés par un moteur pas à pas (21).

5. Embrayage hydraulique dépendant de la différence de vitesse de rotation selon la revendication 1, **caractérisé en ce qu'**un clapet de retenue à double action (22) est prévu entre les troisième et quatrième ouvertures (11, 12) et la chambre de pression (4).

6. Embrayage hydraulique dépendant de la différence de vitesse de rotation selon la revendication 5, **caractérisé en ce qu'**un canal de refroidissement (48) va de la machine de déplacement (35) dans l'espace de couplage (61), en passant par un clapet d'étranglement (7).

7. Embrayage hydraulique dépendant de la différence de vitesse de rotation selon la revendication 2, **caractérisé en ce que** le clapet de commande commun (20) est formé par un piston de commande (53) mobile dans une douille (51), la douille comportant des deux côtés des ouvertures (56, 57) d'accès au réservoir (8) et des premier (59) et deuxième (58) ouvertures de commande latérales, dont l'une (59) est reliée à la deuxième ouverture d'accès (57) et l'autre (58) est reliée à la première ouverture d'accès (56) (côté pression, respectivement côté aspiration) de la machine de déplacement (35), et le piston de commande (53) fermant dans ses deux positions d'extrémité (53, 53" ) la première ouverture de commande (58), resp. la deuxième ouverture de commande (59), et fermant plus ou moins, dans un sens opposé, les deux ouvertures de commande (58, 59), dans les positions intermédiaires (53').

8. Embrayage hydraulique dépendant de la différence de vitesse de rotation selon la revendication 7, **caractérisé en ce que** la douille (51) du clapet de commande (20) est disposée dans un plan transversal à l'axe de rotation de l'embrayage, au niveau des entrées de rotation (13, 14).

9. Embrayage hydraulique dépendant de la différence de vitesse de rotation selon la revendication 5, **caractérisé en ce que** le clapet de retenue à double action (22) agencé entre la machine de déplacement (35) et la chambre de pression (4) est constitué d'un perçage tangentiel (65) s'étendant dans un plan transversal à l'axe de rotation de l'embrayage, et d'un corps de fermeture (71) guidé à l'intérieur, les deux extrémités du perçage tangentiel (65) étant en liaison avec les troisième et quatrième ouvertures (11, 12) de la machine de déplacement (35) et son milieu étant en liaison avec la chambre de pression (4).
